# EUROPÄISCHE PATENTSCHRIFT

(11) **EP 2 226 545 B1**
(45) Veröffentlichungstag und Bekanntmachung des Hinweises auf die Patenterteilung: **31.07.2013**
(21) Anmeldenummer: 10154367.6
(22) Anmeldetag: 23.02.2010
(51) Int. Cl.: F16L 43/00, E03C 1/02, F15D 1/04

(54) **Rohrleitungselement und Verwendung dafür**
Pipe element and use of same
Elément de conduite et utilisation correspondante

(30) Priorität: 04.03.2009 DE 102009011177
(43) Veröffentlichungstag der Anmeldung: 08.09.2010
(73) Patentinhaber: VIEGA GmbH & Co. KG, 57439 Attendorn (DE)
(72) Erfinder: Michels, Mathias, 57368 Lennestadt (DE); Bruno, Loredana, 57439 Attendorn (DE)
(74) Vertreter: Cohausz & Florack

(56) Entgegenhaltungen:
- EP-A1- 0 378 515
- EP-A1- 1 348 815
- DE-C- 588 113
- GB-A- 188 369
- US-A- 2 654 619

## Beschreibung

Die Erfindung betrifft ein als Wandscheibe ausgebildetes Rohrleitungselement mit einem Zulauf, mit einem Ablauf und mit einem Innenkanal, wobei der Innenkanal den Zulauf mit dem Ablauf durchströmbar verbindet und wobei der Innenkanal im Bereich des Zulaufs einen geringeren Querschnitt aufweist als im Bereich des Ablaufs. Die Erfindung betrifft auch vorteilhafte Verwendungen des Rohrleitungselementes.

Derartige Rohrleitungselemente werden im Stand der Technik als Wandscheiben verwendet und dienen so dazu, eine spätere Anschlussmöglichkeit für Armaturen, Ventile, Leitungen oder ähnlichen Komponenten zur Verfügung zu stellen. Der Zulauf der Wandscheibe ist dabei an eine Versorgungsleitung, zum Beispiel an eine Wasserleitung angeschlossen. An den Ablauf wird die zu versorgende Komponente angeschlossen, so dass das zu leitende Medium von der Versorgungsleitung in die Wandscheibe, und von der Wandscheibe in die Komponente strömen kann. Da die anzuschließenden Komponenten in der Regel einen größeren Anschlussquerschnitt aufweisen als die Versorgungsleitung, weist die Wandscheibe zudem eine Querschnittsvergrößerung auf, so dass der Ablauf der Wandscheibe an die Größe der anzuschließenden Komponenten angepasst ist.

Weiterhin werden derartige Rohrleitungssysteme auch in Rohrsystemen an Stellen eingesetzt, an denen ein Übergang von einem bestimmten Rohrquerschnitt zu einem größeren Rohrquerschnitt vorgesehen ist. Derartige Rohrelemente dienen somit als Übergangsstück bzw. als Adapter zwischen zwei verschiedenen Rohrdurchmessern, beispielsweise zwischen Rohrabschnitten mit zwei verschiedenen Normgrößen.

Im Stand der Technik werden derartige Rohrleitungselemente bzw. Wandscheiben durch Warmpressen oder spanende Bearbeitung aus beispielsweise Messing oder Rotguss hergestellt. Derartige Rohrleitungselemente haben den Nachteil, dass sie bei dem durchströmenden Medium zu einem Druckverlust von bis zu 500 mbar führen können. Der somit stark verringerte Druck des Mediums nach Durchfließen des Rohrleitungselementes kann dazu führen, dass daran angeschlossene Komponenten nicht mehr richtig funktionieren oder die Medienweiterleitung in daran angeschlossenen Rohrleitungssystem nicht gewährleistet werden kann.

Weiteren Stand der Technik stellt die EP 0 378 515 A1 dar, in welcher ein Übergangsstück zum Anschluss einer Armatur an eine Rohrleitung mit einem Innengewinde und einem Außengewinde offenbart wird.

Die Druckschrift GB 188 369 A betrifft ein Fitting zum Anschluss eines Wasserhahns. Um eine möglichst homogene Strömung zu erlangen, ist eine Aussparung vorgesehen, welche als Puffer dient.

Die Druckschrift US 2 654 619 A betrifft ein Ellenbogen-Rohrfitting, welches an Rohrenden angeschweißt werden soll. Durch Aufschneiden und Zusammenfügen des Fittings kann der Umlenkwinkel eingestellt werden.

Die Druckschrift DE 588 113 C betrifft eine Leitflächenanordnung für Kanäle mit Ecken oder schroffen Krümmungen, wie sie in verschiedenen Leitungen vorkommen. Zur Strömungsoptimierung werden Leitflächen in der Leitung angeordnet.

Der vorliegenden Erfindung liegt daher die technische Aufgabe zu Grunde, ein Rohrleitungselement anzugeben, mit denen die genannten Nachteile aus dem Stand der Technik reduziert oder vermieden werden.

Diese Aufgabe wird bei einer gattungsgemäßen Wandscheibe erfindungsgemäß dadurch gelöst, dass die den Innenkanal begrenzende Fläche mindestens im Bereich der Querschnittserweiterung des Innenkanals tangentenstetig ausgebildet ist und dass die Auβen Kontur des Innenkanals im Längsschnitt im Wesentlichen einer Viertelellipse entspricht.

Es ist erkannt worden, dass die bei den Rohrleitungselementen aus dem Stand der Technik auftretenden, zum Teil scharfen Kanten im Innenkanal einen hohen Druckabfall verursachen. So führt eine plötzliche scharfkantige Erweiterung des Strömungsquerschnitts zu starken Ablösungen und Wirbelbildungen in der Strömung, mit denen ein erheblicher Druckverlust einhergeht. Durch das tangentenstetige Ausbilden der den Innenkanal begrenzenden Fläche werden plötzliche Änderungen des Strömungsquerschnitts vermieden, so dass der Druckabfall in dem Rohrleitungselement gegenüber dem zuvor beschriebenen, aus dem Stand der Technik bekannten Rohrleitungselement stark reduziert werden kann.

Unter einer tangentenstetigen Fläche wird insbesondere eine Fläche ohne Kanten beziehungsweise eine im Wesentlichen stetig differenzierbare Fläche verstanden. Die Einschränkung "im Wesentlichen" bezieht sich dabei auf die für die Strömung relevante Größenordnung, da die Genauigkeit der Fläche bei der Ausbildung des Innenkanals beispielsweise durch Fertigungstoleranzen beschränkt ist. Die Tangentenstetigkeit ist somit nicht in infinitesimalem mathematischem Sinne zu verstehen.

Der Druckabfall kann in einer bevorzugten Ausführungsform des Rohrleitungselementes weiter dadurch reduziert werden, dass die den Innenkanal begrenzende Fläche im gesamten Bereich zwischen dem Zulauf und dem Ablauf tangentenstetig ausgebildet ist.

Da die Ablösungen und die Wirbelbildungen besonders bei gekrümmten Rohrleitungselementen auftreten, weist die Mittellinie des Innenkanals in einer bevorzugten Ausführungsform des Rohrleitungselementes mindestens eine Richtungsänderung, vorzugsweise eine Richtungsänderung um etwa 90° auf. Insbesondere handelt es sich um ein um etwa 90° abgewinkeltes Rohrleitungselement. Der bei vergleichbaren Ausführungsformen aus dem Stand der Technik auftretende Druckabfall kann auf diese Weise erheblich reduziert werden, wobei gleichzeitig eine platzsparende Umlenkung des geführten Mediums ermöglicht wird. Unter der Mittellinie wird die bezüglich des Querschnitts mittig durch den Innenkanal verlaufende Linie verstanden.

In einer weiteren bevorzugten Ausführungsform des Rohrleitungselementes ist der Querschnitt des Innenkanals im Bereich des Zulaufs und im Bereich des Ablaufs kreisförmig. Auf diese Weise ist das Rohrleitungselement direkt für den Anschluss von Rohren mit einem kreisförmigen Querschnitt geeignet. Insbesondere weist der Querschnitt des Innenkanals im Bereich des Zulaufs und im Bereich des Ablaufs dabei ein für Rohrleitungen bzw. Armaturen und dergleichen übliches Normmaß auf. Dadurch wird eine Querschnittsänderung und somit ein Druckverlust im Übergang des Rohrleitungselementes zu dem daran angeschlossen Element reduziert oder sogar vermieden.

Eine besonders vorteilhafte Gestaltung der Fläche des Innenkanals wird gemäß einer weiteren Ausführungsform des Rohrleitungselementes dadurch erreicht, dass der Querschnitt des Innenkanals im Wesentlichen ellipsenförmig oder kreisförmig ist. So kann durch kreisförmige Querschnitte im Bereich des Zulaufs und des Ablaufs und ellipsenförmige Querschnitte zwischen diesen Bereichen ein vorteilhaftes Strömungsverhalten des zu führenden Mediums erreicht werden, so dass es zu einem besonders geringen Druckabfall kommt.

Die Form des Innenkanals wird bei einem gebogenen Rohrleitungselement bevorzugt so gewählt, dass die Innenkontur im Längsschnitt im Wesentlichen einem Viertelkreis und die Außenkontur im Längsschnitt im Wesentlichen einer Viertelellipse mit einem gegenüber dem Viertelkreis der Innenkontur vergrößerten Radius und/oder einem verschobenen Mittelpunkt entspricht. Anstelle des Viertelkreises kann die Innenkontur auch als Viertelellipse ausgebildet werden. Die Mittelpunkte der Viertelkreise bzw. der Viertelellipsen können bei den verschiedenen Ausführungsformen zweckmäßig jeweils aufeinander liegen oder voneinander beabstandet sein. Alternativ kann die Innenfläche zwischen dem Zulauf und dem Ablauf auch durch Splines bestimmt werden.

Unter Splines werden Funktionen verstanden, die stückweise aus Polynomen mit einem maximalen vorgegeben Grad zusammengesetzt sind. Es kann sich bei den Splines beispielsweise um kubische Splines oder B-Splines, insbesondere um B-Spline-Flächen handeln.

Die Splines sind bevorzugt so angepasst, dass die Innenfläche im Bereich des Zulaufs und im Bereich des Ablaufs gegenüber der Innenfläche des anzuschließenden Rohres bzw. der Armatur und dergleichen keine Steigung aufweist. Weiterhin ist auch bevorzugt, dass die Splines an diesen Stellen eine verschwindende Krümmung aufweisen.

Eine weitere Reduzierung des Druckabfalls wird in einer bevorzugten Ausführungsform des Rohrleitungselementes dadurch erreicht, dass der Querschnitt des Innenkanals vom Zulauf bis zum Ablauf eine monotone Verbreiterung aufweist, da auf diese Weise lokal verjüngte Bereiche, die eine Wirbelbildung verursachen können, vermieden werden.

Zum vereinfachten Anschluss von Armaturen und dergleichen weist der Innenkanal bei einer weiteren bevorzugten Ausführungsform des Rohrleitungselementes im Bereich des Ablaufs ein Innengewinde auf. Dieses wirkt besonders vorteilhaft mit der tangentenstetigen Fläche des Innenkanals zusammen. Bei gattungsgemäßen Rohrleitungselementen aus dem Stand der Technik, wie sie beispielsweise oben beschrieben werden, ist die Tiefe des Innengewindes und somit die mögliche Einschraubtiefe durch die scharfe Kante beim Übergang vom ablaufseitigen zum zulaufseitigen Teil des Rohrleitungselementes beschränkt.

Durch eine tangentenstetige Fläche wird eine solche Beschränkung vermieden, so dass eine mit einem Außengewinde versehene Komponente einfach und flexibel an das Rohrleitungselement angeschlossen werden kann. Zu diesem Zweck ist weiterhin bevorzugt, dass das Innengewinde durch einen Vorsprung nach innen abgesetzt ist.

In einer weiteren bevorzugten Ausführungsform des Rohrleitungselementes weist der Innenkanal im Bereich des Zulaufs ein Fitting auf. Auf diese Weise ist ein direkter Anschluss des Rohrleitungselementes an eine Versorgungsleitung bzw. ein Versorgungsrohr möglich. Das Fitting kann im Prinzip wie jedes aus dem Stand der Technik bekannte Fitting ausgebildet sein. Bevorzugterweise ist das Fitting an das Rohrverbindungssystem des anzuschließenden Versorgungsrohres angepasst.

An der Außenseite des Rohrleitungselementes sind in einer weiteren bevorzugten Ausführungsform Mittel zur Wandbefestigung vorgesehen. Dadurch kann das Rohrleitungselement beispielsweise als Wandscheibe an einer Wand befestigt werden.

Eine weitere bevorzugte Ausführungsform ist dadurch gegeben, dass das Rohrleitungselement mit einem Gießverfahren, insbesondere im Sandguss, Kokillenguss oder in einem Wachsausschmelzverfahren hergestellt wurde. Das Rohrleitungselement kann im Prinzip mit jedem klassischen Gießverfahren hergestellt werden. Im Gegensatz zur spanenden Herstellung bei Rohrleitungsstücken aus dem Stand der Technik kann durch den Sandguss eine tangentenstetige Fläche des Innenkanals ohne aufwändige Nachbearbeitung erreicht werden.

Unter dem Sandguss wird ein Verfahren verstanden, bei dem zunächst ein Modell des herzustellenden Rohrleitungselementes, z.B. aus Holz, Ton oder Metall, in einen Formstoff, z.B. Sand mit einem Bindemittel, eingeformt und danach wieder entfernt wird. Der verbleibende Hohlraum wird dann mit dem Material ausgegossen, aus dem das Rohrleitungselement hergestellt werden soll. Bei diesem Material kann es sich beispielsweise um Messing oder Rotguss handeln. Bei der Herstellung des Rohrleitungselementes wird insbesondere auch die Form des Innenkanals durch einen Kern in der Sandgussform hergestellt.

Die technische Aufgabe wird erfindungsgemäß weiterhin dadurch gelöst, dass das erfindungsgemäße Wandscheibe als Doppelwandscheibe verwendet wird. Unter einer Doppelwandscheibe wird dabei eine Wandscheibe mit zwei Anschlüssen für Versorgungsrohre verstanden. Bei den Versorgungsrohren kann es sich dabei um zwei Zuleitungen oder um eine Zu- und eine Ableitung handeln. Sowohl bei Wandscheiben als auch bei Doppelwandscheiben wird durch die tangentenstetige Fläche des Innenkanals eine Verringerung des Druckverlustes erreicht. Dies ist insbesondere bei Wandscheiben oder Doppelwandscheiben vorteilhaft, bei denen der Ablauf zum Anschluss einer Armatur oder ähnlichem abgewinkelt, zum Beispiel um etwa 90° bezüglich des Zulaufs abgewinkelt ist, da derartige Wandscheiben oder Doppelwandscheiben aus dem Stand der Technik zu einem besonders hohen Druckabfall führen können.

Weitere Merkmale und Vorteile der Erfindung können der nachfolgenden Beschreibung von fünf Ausführungsbeispielen entnommen werden, wobei auf die beigefügte Zeichnung Bezug genommen wird.

In der Zeichnung zeigen
- Fig. 1: ein als Wandscheibe ausgebildetes Rohrleitungselement aus dem Stand der Technik im Längsschnitt,
- Fig. 2: ein Rohrleitungssystem mit einem Rohrleitungselement aus dem Stand der Technik im Längsschnitt,
- Fig. 3a-d: ein erstes Ausführungsbeispiel eines nicht unter die Erfindung fallenden Rohleitungselementes in einem Längsschnitt und drei Querschnitten,
- Fig. 4: ein zweites Ausführungsbeispiel eines erfindungsgemäßen Rohrleitungselementes im Längsschnitt,
- Fig. 5: ein drittes Ausführungsbeispiel eines erfindungsgemäßen Rohrleitungselementes im Längsschnitt,
- Fig. 6a-b: ein viertes Ausführungsbeispiel eines erfindungsgemäßen Rohrleitungselementes in zwei Querschnitten und
- Fig. 7: ein fünftes Ausführungsbeispiel eines erfindungsgemäßen Rohrleitungselementes im Längsschnitt.

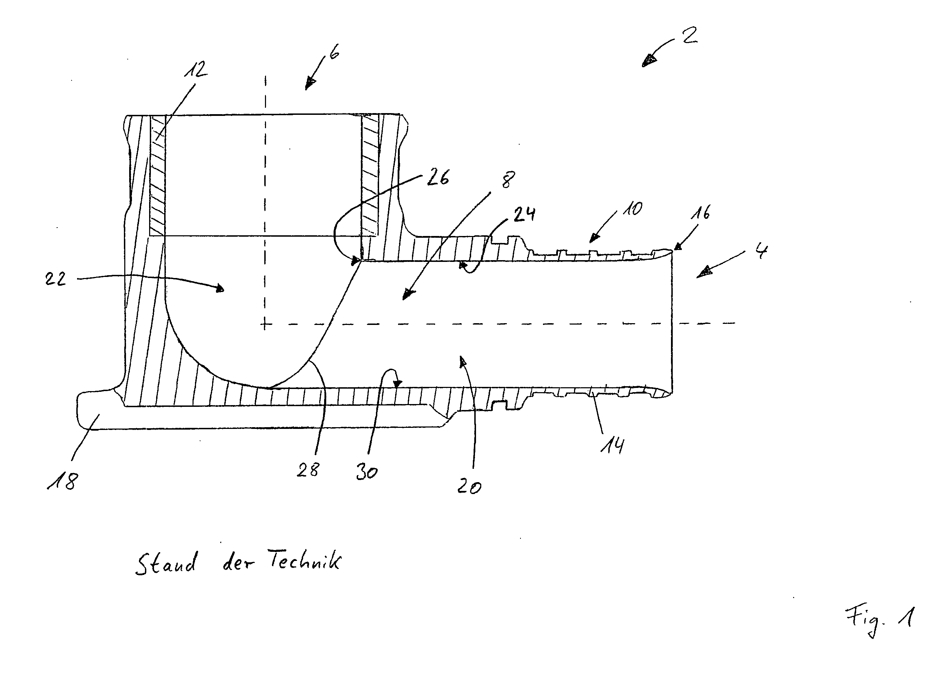

Fig. 1 zeigt ein als Wandscheibe ausgebildetes Rohrleitungselement aus dem Stand der Technik im Längsschnitt. Das Rohrleitungselement 2 weist einen Zulauf 4, einen Ablauf 6 sowie einen Innenkanal 8 auf, der den Zulauf 4 mit dem Ablauf 6 durchströmbar verbindet. Der Querschnitt des Innenkanals ist im Bereich des Zulaufs 4 geringer als im Bereich des Ablaufs 6. Die Wandscheibe 2 ist im Bereich des Zulaufs 4 als Fitting 10 ausgebildet und weist im Bereich des Ablaufs 6 ein Innengewinde 12 auf.

Das Fitting 10 ist so ausgebildet, dass es in das Ende eines anzuschließenden Versorgungsrohres (nicht gezeigt) eingeführt werden kann. Dazu weist das Fitting 10 an der äußeren Seite ein Profil 14 auf, welches durch ein Verpressen des Fittings mit dem anzuschließenden Rohr in die Innenwand des Rohres eingeformt werden kann, so dass sich auf diese Weise eine dichte Verbindung ergibt. Das Fitting weist weiterhin am distalen Ende eine Aufweitung 16 auf, durch welche eine Angleichung des Querschnitts an den Querschnitt des anzuschließenden Rohres erreicht wird.

An der Wandscheibe 2 ist noch eine Wandbefestigung 18 vorgesehen. Diese kann beispielsweise aus einer Bohrlöcher aufweisenden Platte bestehen, welche an eine Wand geschraubt werden kann.

Der Innenkanal 8 der in Fig. 1 gezeigten Wandscheibe 2 besteht aus einem zulaufseitigen Teil 20 und einen ablaufseitigen Teil 22. Die beiden Teile 20 und 22 wurden mit einem aus dem Stand der Technik üblichen Verfahren durch eine Bohrung mit kleinem Durchmesser von der Seite des Zulaufs 4 und durch eine Bohrung mit großem Durchmesser von der Seite des Ablaufs 6 hergestellt. Der Innenkanal 8 weist dadurch an seiner Innenkontur 24 eine scharfe Kante 26 auf, die sich als Kontur 28 über den Querschnitt des zulaufseitigen Teils 20 bis zur Außenkontur 30 erstreckt.

Strömt nun ein Medium, beispielsweise Wasser, vom Zulauf 4 durch den Innenkanal 8 zum Ablauf 6, kommt es im Bereich der Kante 26 bzw. der Kontur 28 zu Ablösungen und Wirbelbildungen und dadurch bedingt zu einem großen Druckabfall des Mediums.

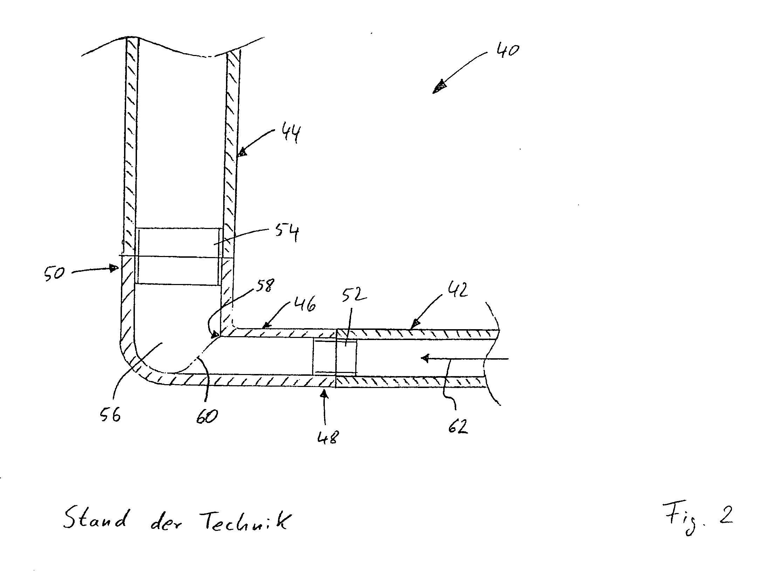

Fig. 2 zeigt ein Rohrleitungssystem mit einem Rohrleitungselement aus dem Stand der Technik im Längsschnitt. Das Rohrleitungssystem 40 besteht aus einem ersten Rohr 42 mit einem geringen Durchmesser, einem zweiten Rohr 44 mit einem größeren Durchmesser sowie aus einem Rohrleitungselement 46 mit einem Zulauf 48 und einem Ablauf 50. Das erste Rohr 42 ist über einen Fitting 52 mit dem Zulauf 48 und das zweite Rohr 44 ist über einen Fitting 54 mit dem Ablauf 50 des Rohrleitungselementes 46 verbunden. Der Innenkanal 56 des Rohrleitungselementes 46 weist wie die in Fig. 1 gezeigte Wandscheibe eine scharfe Kante 58 und eine entsprechende Kontur 60 auf.

Durchströmt ein Medium 62 das Rohrleitungssystem 40, kommt es an der Kante 58 und an der Kontur 60 zu Ablösungen und Wirbelbildungen, so dass auch hier ein starker Druckabfall auftritt.

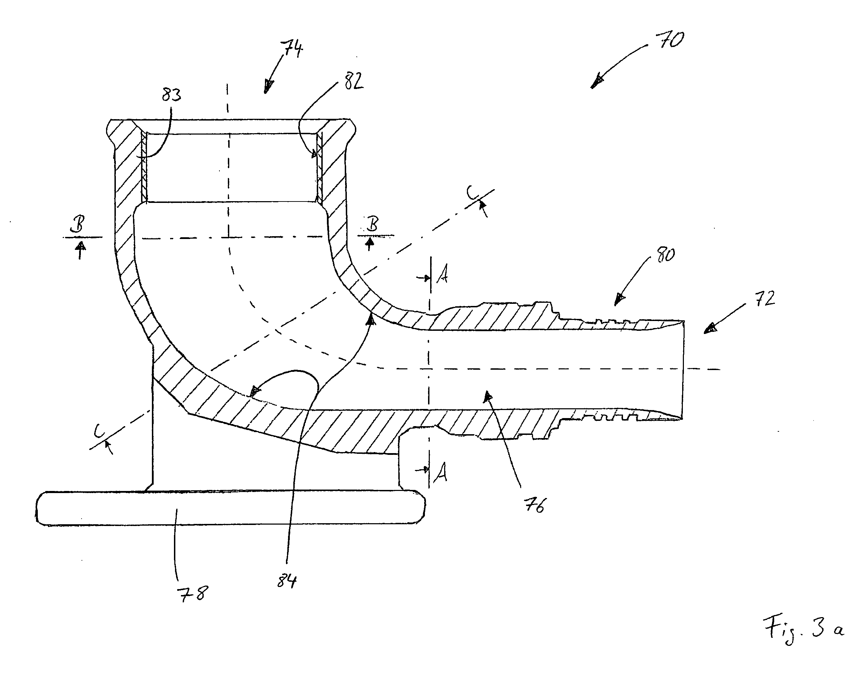

In Fig. 3a-d ist nun ein erstes Ausführungsbeispiel eines erfindungsgemäßen Rohleitungselementes gezeigt. Fig. 3a zeigt ein als Wandscheibe 70 ausgebildetes Rohrleitungselement im Längsschnitt. Die Wandscheibe 70 weist einen Zulauf 72, einen Ablauf 74, einen Innenkanal 76 und optional eine Wandbefestigung 78 auf. Im Bereich des Zulaufs 72 ist die Wandscheibe 70 analog zu der in Fig. 1 dargestellten Wandscheibe als Fitting ausgebildet. Im Bereich des Ablaufs 74 weist die Wandscheibe 70 zudem ein Innengewinde 82 auf, welches optional durch einen Vorsprung 83 nach innen abgesetzt ist.

Die den Innenkanal 76 begrenzende Fläche 84 ist im Bereich der Querschnittserweiterung des Innenkanals 76 tangentenstetig ausgebildet. Das heißt die Fläche 84 weist insbesondere keine Kanten auf, so dass Ablösungen und Wirbelbildungen des durch die Wandscheibe 70 geführten Mediums (nicht gezeigt) reduziert werden. Auf diese Weise wird der Druckabfall im Vergleich zum Druckabfall bei Wandscheiben aus dem Stand der Technik, beispielsweise der in Fig. 1 gezeigten Wandscheibe 2, reduziert.

Durch den Vorsprung 83 und/oder durch die tangentenstetig ausgebildete Fläche 84 ist eine mit einem Außengewinde versehene, an den Ablauf 74 der Wandscheibe 70 anzuschließende Komponente flexibel und einfach einschraubbar, da die Einschraubtiefe durch die Fläche 84 im Bereich des Ablaufs 74 nicht beschränkt wird.

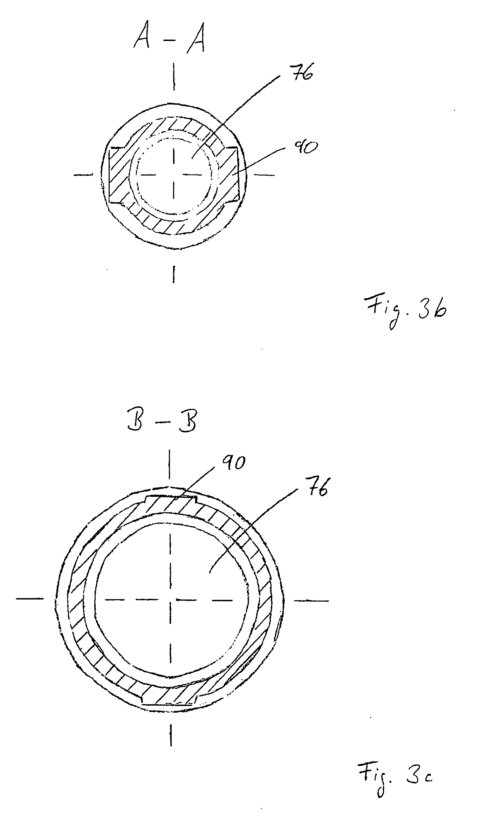

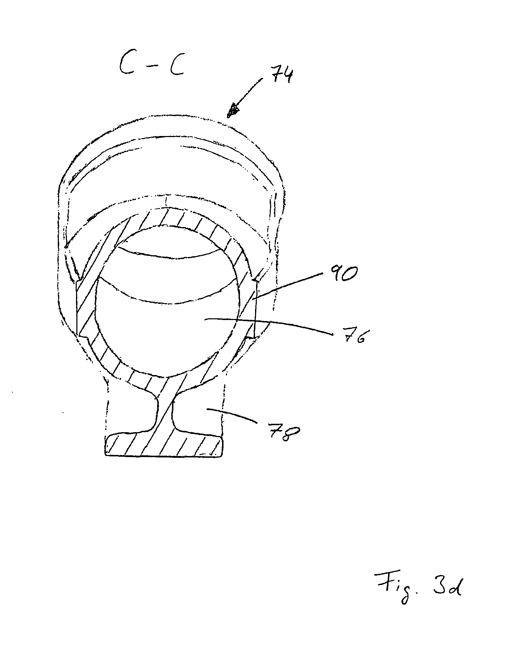

Ein Rohrleitungselement wie die in Fig. 3 gezeigte Wandscheibe 70 kann bevorzugt mit einem Sandgussverfahren hergestellt werden, da dieses Herstellungsverfahren die tangentenstetige Ausbildung der Fläche 84 ohne aufwändige Nachbearbeitung ermöglicht.

Fig. 3b und Fig. 3c zeigen die Querschnitte in den in Fig. 3a mit A-A bzw. B-B gekennzeichneten Ebenen. Die in Fig. 3a gezeigten Pfeile geben die Blickrichtung an. Der Querschnitt des Innenkanals 76 ist sowohl im Bereich des Zulaufs, als auch im Bereich des Ablaufs kreisförmig und weist im Bereich des Zulaufs (Fig. 3b) einen kleineren Durchmesser auf als im Bereich des Ablaufs (Fig. 3c).

An der im Wesentlichen kreisförmigen Außenseite der Wandscheibe 70 sind optional Vorsprünge 90 ausgebildet, die zu einer Stabilisierung und als Ansatz für ein Werkzeug, insbesondere zum Verbinden des Rohrleitungselementes mit weiteren Komponenten dienen. Die Vorsprünge 90 können auch für eine Kennzeichnung der Wandscheibe 70, beispielsweise mit einem Schriftzug verwendet werden.

Fig. 3d zeigt den Querschnitt der in Fig. 3a mit C-C gekennzeichneten Ebene. Der Innenkanal 76 weist in diesem Bereich einen ellipsenförmigen Querschnitt auf. In der Zusammenschau der Figuren 3a bis 3d ist ersichtlich, dass der Querschnitt des Innenkanals 76 sich über den Verlauf durch den Innenkanal 76 von einer Kreisform mit einem geringen Durchmesser im Bereich des Zulaufs 72 (Fig. 3b) über eine Ellipsenform (Fig. 3c) wieder in eine Kreisform mit einem größerem Durchmesser im Bereich des Ablaufs (Fig. 3d) verändert. Die Änderung des Querschnitts erfolgt dabei kantenfrei, d.h. die Fläche 84 des Innenkanals 76 ist tangentenstetig ausgebildet.

Durchströmt nun ein Medium, beispielsweise Wasser, die Wandscheibe 70, kommt es dadurch zu geringeren Ablösungen und Wirbelbildungen uns somit zu einem geringeren Druckabfall als bei einer Wandscheibe aus dem Stand der Technik, wie beispielsweise der in Fig. 1 gezeigten Wandscheibe.

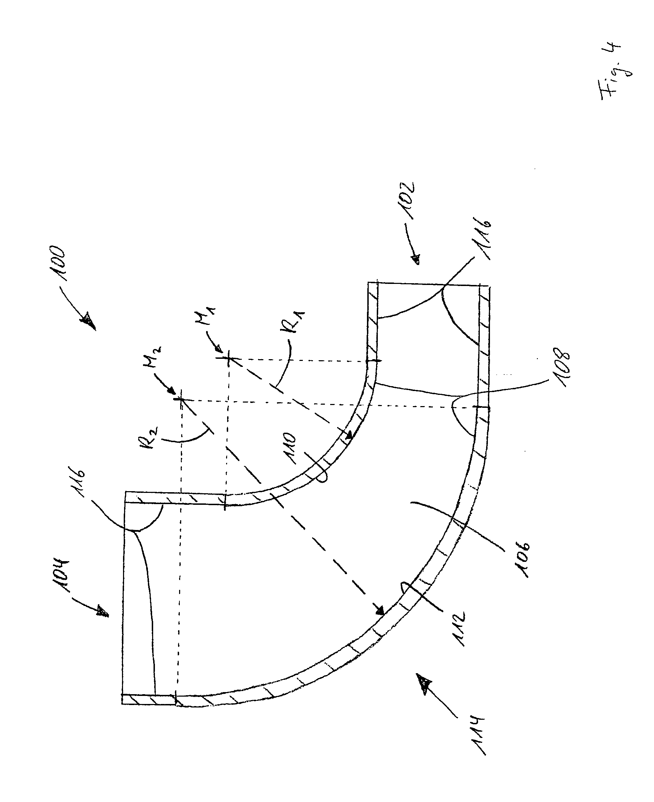

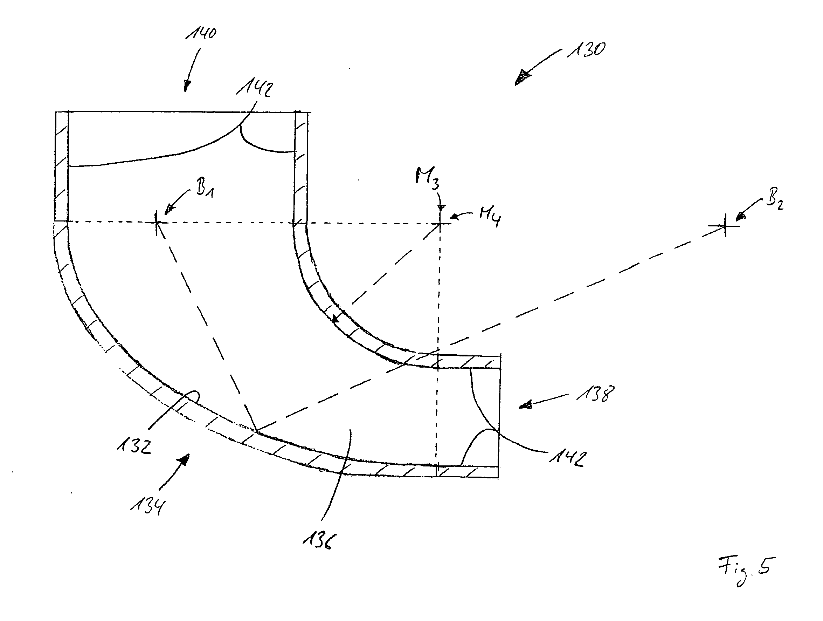

In den Figuren 4 und 5 sind zwei Beispiele für mögliche Verläufe der den Innenkanal begrenzenden Fläche gezeigt. Die Darstellung der Ausführungsbeispiele ist zweckgemäß auf die Form des Innenkanals beschränkt. Es ist klar, dass die gezeigten Rohrleitungselemente mit beliebigen Anschlusskomponenten, wie Fittings, Gewinden, Wandbefestigungen oder ähnlichem kombiniert werden können.

Das in Fig. 4 im Längsschnitt gezeigte nicht unter die Erfindung fallende Rohrleitungselement 100 weist einen Zulauf 102 und einen Ablauf 104 sowie einen Innenkanal 106 auf. Die den Innenkanal 106 begrenzende Fläche 108 weist in dem dargestellten Längsschnitt eine Innenkontur 110 und eine Außenkontur 112 auf. Im Bereich 114 der Querschnittserweiterung des Innenkanals weist die Innenkontur 110 die Form eines ersten Viertelkreises mit einem ersten Radius R₁ und einem ersten Kreismittelpunkt M₁ und die Außenkontur 112 die Form eines zweiten Viertelkreises mit einem zweiten Radius R₂ und einem zweiten Kreismittelpunkt M₂ auf. Der zweite Radius R₂ ist größer als der erste Radius R₁ und der zweite Kreismittelpunkt M₂ ist von dem ersten Kreismittelpunkt M₁ beabstandet. Die Kreismittelpunkte M₁ und M₂ können natürlich auch zusammenfallen, beispielsweise bei einer von einem exakten Viertelkreis abweichenden Innenkontur 110 und/oder Außenkontur 112.

An den ersten und an den zweiten Viertelkreis schließen sich im Bereich des Zulaufs 102 und im Bereich des Ablaufs 104 jeweils in der Länge angepasste gerade Stücke 116 an, damit der Innenkanal des Rohrleitungselementes in diesen Bereichen parallel zu den jeweiligen Innenkanälen der anzuschließenden Komponenten verläuft. Der Übergang der Innenkontur 110 sowie der Außenkontur 112 verläuft von den viertelkreisförmigen Bereichen zu den jeweiligen geraden Stücken 116 tangentenstetig.

Das in Fig. 5 dargestellte Rohrleitungselement 130 unterscheidet sich von dem Rohrleitungselement 100 aus Fig. 4 dadurch, dass die Außenkontur 132 im Bereich 134 der Querschnittserweiterung des Innenkanals 136 in Form einer Viertelellipse mit dem Ellipsenmittelpunkt M₃ und den Brennpunkten B₁ und B₂ ausgebildet ist. Der Ellipsenmittelpunkt M₃ fällt in dem dargestellten Ausführungsbeispiel mit dem Kreismittelpunkt M₄ des Viertelkreises, durch den die Form der Innenkontur gebildet wird, zusammen. Die Mittelpunkte M₃ und M₄ können aber auch beabstandet voneinander angeordnet sein. Es ist weiterhin natürlich auch möglich, dass die Form der Innenkontur ebenfalls als Viertelellipse ausgebildet wird.

Im Bereich des Zulaufs 138 und im Bereich des Ablaufs 140 schließen jeweils in der Länge angepasste gerade Stücke 142 an den Viertelkreis bzw. an die Viertelellipse an. Fallen der Ellipsenmittelpunkt M₃ und der Kreismittelpunkt M₄ wie in Fig. 5 zusammen, sind die geraden Stücke 142 im Bereich des Zulaufs 138 und des Ablaufs 140 vorteilhafterweise jeweils gleichlang.

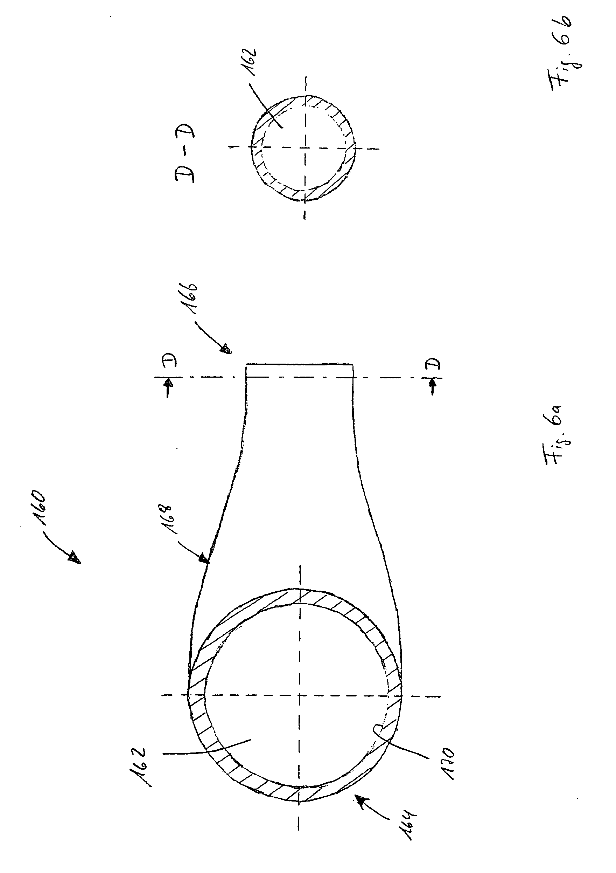

In Figur 6a ist ein viertes Ausführungsbeispiel eines erfindungsgemäßen Rohrleitungselementes im Querschnitt gezeigt, wobei die Schnittebene senkrecht zur Ablaufrichtung liegt. Die Darstellung des Rohrleitungselementes 160 ist bei den Rohrleitungselementen 100 und 130 in den Figuren 4 und 5 zweckgemäß vereinfacht.

Der Querschnitt des Innenkanals 162 ist im Bereich des Ablaufs 164 kreisförmig und verjüngt sich zum Bereich des Zulaufs 166. In Fig. 6b ist der Schnitt entlang der in Fig. 6a mit D-D gekennzeichneten Ebene dargestellt. Der Ablauf 164 ist gegenüber dem Zulauf 166 um 90° abgewinkelt. Der Innenkanal 162 weist in diesem Bereich eine Kreisform mit einem im Vergleich zum Bereich des Ablaufs geringeren Durchmesser auf.

Der Verlauf der Außenfläche 168 und der entsprechend im Wesentlichen parallel dazu verlaufenden Fläche 170 des Innenkanals 162 ist durch Splines, beispielsweise durch kubische Splines oder B-Splines, insbesondere durch B-Spline-Flächen bestimmt. Dadurch ist die Fläche 170 des Innenkanals 162 tangentenstetig ausgebildet.

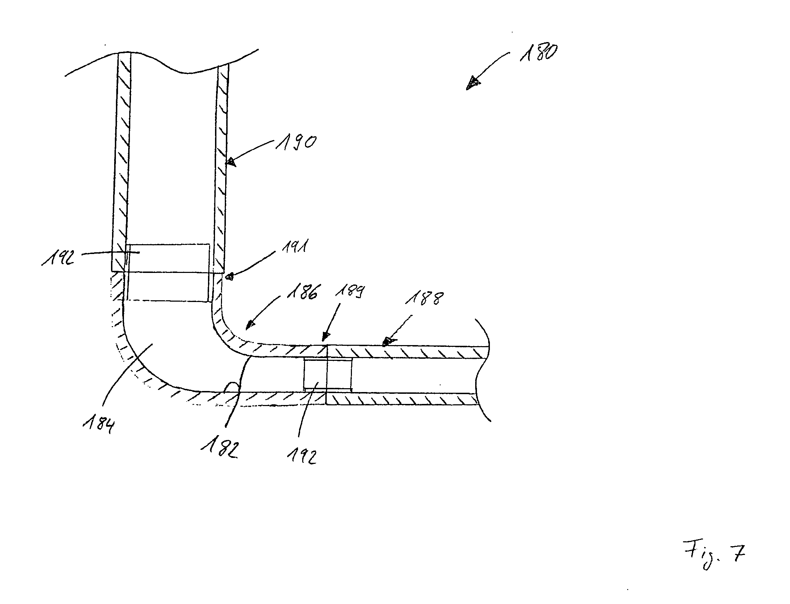

Fig. 7 zeigt ein Rohrleitungssystem mit einem fünften Ausführungsbeispiel eines erfindungsgemäßen Rohrleitungselementes im Längsschnitt. Das Rohrleitungssystem 180 unterscheidet sich von dem in Fig. 2 gezeigten Rohrleitungssystem 40 dadurch, dass die Fläche 182 des Innenkanals 184 des Rohrleitungselementes 186, an den das erste Rohr 188 mit einem geringem Durchmesser im Bereich des Zulaufs 189 und das zweite Rohr 190 mit einem größerem Durchmesser im Bereich des Ablaufs 191 angeschlossen sind, tangentenstetig ausgebildet ist. Die Fläche 182 kann dabei bevorzugt wie bei den in den Figuren 3 bis 6b gezeigten Rohrleitungselementen ausgebildet sein oder auch eine andere tangentenstetige Form aufweisen. Auf diese Weise werden die Ablösungen und Wirbelbildungen im Vergleich zu dem in Fig. 2 gezeigten Rohrleitungselement 46 reduziert, so dass auch das Rohrleitungssystem 180 im Vergleich zu dem Rohleitungssystem 40 einem geringeren Druckabfall unterliegt.

Die Verbindung des ersten Rohres 188 und des zweiten Rohres 190 mit dem Rohrleitungselement 186 ist in Fig. 7 beispielhaft durch Fittings 192 dargestellt. Die Rohre 188, 190 können mit dem Rohrleitungselement 186 jedoch auch auf eine andere, aus dem Stand der Technik bekannte Weise zur Verbindung von Rohren und dergleichen verbunden sein.

## Patentansprüche

1. Wandscheibe
- mit einem Zulauf (72, 138, 166, 189),
- mit einem Ablauf (74, 140, 164, 191) und
- mit einem Innenkanal (76, 136, 162, 184),
- wobei der Innenkanal (76, 136, 162, 184) den Zulauf (72, 138, 166, 189) mit dem Ablauf (74, 140, 164, 191) durchströmbar verbindet und
- wobei der Innenkanal (76, 136, 162, 184) im Bereich des Zulaufs (72, 138, 166, 189) einen geringeren Querschnitt aufweist als im Bereich des Ablaufs (74, 140, 164, 191),
**dadurch gekennzeichnet,**
- **dass** die den Innenkanal (76, 136, 162, 184) begrenzende Fläche (84, 142, 170, 182) mindestens im Bereich (134) der Querschnittserweiterung des Innenkanals (76, 136, 162, 184) tangentenstetig ausgebildet ist und
- **dass** die Außenkontur (132) des Innenkanals (76, 136, 162, 184) im Längsschnitt im Wesentlichen einer Viertelellipse entspricht.

2. Wandscheibe nach Anspruch 1,
**dadurch gekennzeichnet,**
**dass** die den Innenkanal (76, 136, 162, 184) begrenzende Fläche (84, 142, 170, 182) im gesamten Bereich zwischen dem Zulauf (72, 138, 166, 189) und dem Ablauf (74, 140, 164, 191) tangentenstetig ausgebildet ist.

3. Wandscheibe nach Anspruch 1 oder 2,
**dadurch gekennzeichnet,**
**dass** die Mittellinie des Innenkanals (76, 136, 162, 184) mindestens eine Richtungsänderung, vorzugsweise eine Richtungsänderung um etwa 90° aufweist.

4. Wandscheibe nach einem der Ansprüche 1 bis 3,
**dadurch gekennzeichnet,**
**dass** der Querschnitt des Innenkanals (76, 136, 162, 184) im Bereich des Zulaufs (72, 138, 166, 189) und im Bereich des Ablaufs (74, 140, 164, 191) kreisförmig ist.

5. Wandscheibe nach einem der Ansprüche 1 bis 4,
**dadurch gekennzeichnet,**
**dass** der Querschnitt des Innenkanals (76, 136, 162, 184) im Wesentlichen ellipsenförmig oder kreisförmig ist.

6. Wandscheibe nach einem der Ansprüche 1 bis 5,
**dadurch gekennzeichnet,**
**dass** der Querschnitt des Innenkanals (76, 136, 162, 184) vom Zulauf (72, 138, 166, 189) bis zum Ablauf (74, 140, 164, 191) eine monotone Verbreiterung aufweist.

7. Wandscheibe nach einem der Ansprüche 1 bis 6,
**dadurch gekennzeichnet,**
**dass** der der Innenkanal (76, 136, 162, 184) im Bereich des Ablaufs (74, 140, 164, 191) ein Innengewinde (82) aufweist.

8. Wandscheibe nach einem der Ansprüche 1 bis 7,
**dadurch gekennzeichnet,**
**dass** der Innenkanal (76, 136, 162, 184) im Bereich des Zulaufs (72, 138, 166, 189) ein Fitting (80) aufweist.

9. Wandscheibe nach einem der Ansprüche 1 bis 8,
**dadurch gekennzeichnet,**
**dass** an der Außenseite Mittel zur Wandbefestigung (78) vorgesehen sind.

10. Wandscheibe nach einem der Ansprüche 1 bis 9,
**dadurch gekennzeichnet,**
**dass** die Wandscheibe (70, 130, 160, 186) mit einem Gießverfahren, insbesondere im Sandguss, Kokillenguss oder in einem Wachsausschmelzverfahren hergestellt wurde.

11. Wandscheibe nach einem der Ansprüche 1 bis 10,
**dadurch gekennzeichnet,**
**dass** die Wandscheibe (70, 130, 160, 186) eine Doppelwandscheibe ist.

## Claims

1. Wall plate elbow
- having an inflow (72, 138, 166, 189)
- having an outflow (74, 140, 64, 191) and
- having an inner channel (76, 136, 162, 184),
- wherein the inner channel (76,136, 162, 184) which connects the inflow (72, 138, 166, 189) to the outflow (74, 140, 164, 191) can be flowed through, and
- wherein the inner channel (76, 136, 162, 184) has a smaller cross-section in the area of the inflow (72, 138, 166, 189) than in the area of the outflow (74, 140, 164, 191),
**characterised**
- **in that** the surface (84, 142, 170, 182) delimiting the inner channel (76, 136, 162, 184) is formed tangentially continuous at least in the area (134) of the cross-section widening of the inner channel (76, 136, 162, 184),
and
- **in that** the outer contour (132) of the inner channel (76, 136, 162, 184) in longitudinal section substantially corresponds to a quarter ellipse.

2. Wall plate elbow according to Claim 1, **characterised in that** the surface (84, 142, 170, 182) delimiting the inner channel (76, 136, 162, 184) is formed tangentially continuous in the whole area between the inflow (72, 138, 166, 189) and the outflow (74, 140, 164, 191).

3. Wall plate elbow according to Claim 1 or 2, **characterised in that** the centre line of the inner channel (76, 136, 162, 184) has at least one change of direction, preferably a change of direction by about 90°.

4. Wall plate elbow according to any one of Claims 1 to 3, **characterised in that** the cross-section of the inner channel (76, 136, 162, 184) is circular in the area of the inflow (72, 138, 166, 189) and in the area of the outflow (74, 140, 164, 191).

5. Wall plate elbow according to any one of Claims 1 to 4, **characterised in that** the cross-section of the inner channel (76, 136, 162, 184) is substantially elliptically shaped or circular.

6. Wall plate elbow according to any one of Claims 1 to 5, **characterised in that** the cross-section of the inner channel (76, 136, 162, 184) has a monotonic broadening from the inflow (72, 138, 166, 189) to the outflow (74, 140, 164, 191).

7. Wall plate elbow according to any one of Claims 1 to 6, **characterised in that** the inner channel (76, 136, 162, 184) has a female thread (82) in the area of the outflow (74, 140, 164, 191).

8. Wall plate elbow according to any one of Claims 1 to 7, **characterised in that** the inner channel (76, 136, 162, 184) has a fitting (80) in the area of the inflow (72, 138, 166, 189).

9. Wall plate elbow according to any one of Claims 1 to 8, **characterised in that** wall fastening means (78) are provided on the outside.

10. Wall plate elbow according to any one of Claims 1 to 9, **characterised in that** the wall plate elbow (70, 130, 160, 186) was produced using a casting process, in particular in sand casting, gravity die casting or in a lost-wax casting process.

11. Wall plate elbow according to any one of Claims 1 to 10, **characterised in that** the wall plate elbow (70, 130, 160, 186) is a double wall plate elbow.

## Revendications

1. Raccord mural
- avec une alimentation (72, 138, 166, 189),
- avec une évacuation (74, 140, 164, 191) et
- avec un canal intérieur (76, 136, 162, 184),
- sachant que le canal intérieur (76, 136, 162, 184) relie l'alimentation (72, 138, 166, 189) à l'évacuation (74, 140, 164, 191), et
- sachant que le canal intérieur (76, 136, 162, 184) est doté, dans la région de l'alimentation (72, 138, 166, 189), d'une section transversale plus petite que dans la région de l'évacuation (74, 140, 164, 191),
**caractérisé en ce que**
- la surface (84, 142, 170, 182), qui limite le canal intérieur (76, 136, 162, 184), est en tangente continue, au moins dans la région (134) de l'élargissement de la section transversale du canal intérieur (76, 136, 162, 184), et que
- le contour extérieur (132) du canal intérieur (76, 136, 162, 184), en coupe longitudinale, correspond sensiblement à un quart d'ellipse.

2. Raccord mural selon la revendication 1, **caractérisée en ce que** la surface (84, 142, 170, 182) limitant le canal intérieur (76, 136, 162, 184) est en tangente continue dans toute la zone comprise entre l'alimentation (72, 138, 166, 189) et l'évacuation (74, 140, 164, 191).

3. Raccord mural selon revendication 1 ou 2, **caractérisé en ce que** la ligne central du canal intérieur (76, 136, 162, 184) présente au moins un changement de direction, de préférence un changement de direction d'environ 90 °.

4. Raccord mural selon l'une des revendications 1 à 3, **caractérisé en ce que** la section transversale du canal intérieur (76, 136, 162, 184) est circulaire dans la zone de l'alimentation (72, 138, 166, 189) et dans la zone de l'évacuation (74, 140, 164, 191).

5. Raccord mural selon l'une des revendications 1 à 4, **caractérisé en ce que** la section transversale du canal intérieur (76, 136, 162, 184) est sensiblement elliptique ou circulaire.

6. Raccord mural selon l'une des revendications 1 à 5, **caractérisé en ce que** la section transversale du canal intérieur (76, 136, 162, 184) présente un élargissement uniforme de l'alimentation (72, 138, 166, 189) à l'évacuation (74, 140, 164, 191).

7. Raccord mural selon l'une des revendications 1 à 6, **caractérisé en ce que** le canal intérieur (76, 136, 162, 184) est doté d'un filet intérieur dans la zone de l'évacuation (74, 140, 164, 191).

8. Raccord mural selon l'une des revendications 1 à 7, **caractérisé en ce que** le canal intérieur (76, 136, 162, 184) est doté d'un raccord (80) dans la région de l'alimentation (72, 138, 166, 189).

9. Raccord mural selon l'une des revendications 1 à 8, **caractérisé en ce que** des moyens (78) des moyens de fixation (78) sont prévus, sur la face extérieure, pour la fixation au mur.

10. Raccord mural selon l'une des revendications 1 à 9, **caractérisé en ce que** le raccord mural (70, 130, 160, 186) est fabriqué selon un procédé de coulée, en particulier de coulée en sable, de coulée en coquille ou selon un procédé de coulée à la cire perdue.

11. Raccord mural selon l'une des revendications 1 à 10, **caractérisé en ce que** le raccord mural (70, 130, 160, 186) est un double raccord mural.
